# EUROPEAN PATENT SPECIFICATION

(11) **EP 3 266 905 B1**
(45) Date of publication and mention of the grant of the patent: **13.05.2020**
(21) Application number: 16177719.8
(22) Date of filing: 04.07.2016
(51) Int. Cl.: C25D 1/10, B44C 3/04, C23C 18/16, C25D 1/00, B29C 33/40, B29C 39/00, B29C 33/38, G04B 13/02, G04B 15/14, G04B 29/02

(54) **METHOD FOR MANUFACTURING A TIMEPIECE COMPONENT**
VERFAHREN ZUR HERSTELLUNG EINER UHRENKOMPONENTE
PROCÉDÉ DE FABRICATION D'UNE PIÈCE D'HORLOGERIE

(43) Date of publication of application: 10.01.2018
(73) Proprietor: Richemont International S.A., 1752 Villars-sur-Glâne (CH)
(72) Inventor: FIACCABRINO, Jean-Charles, CH-1421 Grandevent (CH); TOBENAS BORRON, Susana del Carmen, CH-2017 Boudry (CH)
(74) Representative: e-Patent SA

(56) References cited:
- JP-A- 2001 030 266
- JP-A- 2006 082 477
- JP-A- 2007 240 416
- H. Ito ET AL: "Development of a Novel Transcription Molding Process to Fabricate Sophisticated Polymer Products with Precise Microstructure and High Transparency Applicable to Display Devices and Bio-chips", INTERNATIONAL POLYMER PROCESSING, vol. 22, no. 2, 1 May 2007 (2007-05-01), pages 155-165, XP055589431, DE ISSN: 0930-777X, DOI: 10.3139/217.0984

## Description

The invention relates to a method for manufacturing a timepiece component using a high precision polymer mould according to the preamble of claim 1.

Many different processes for manufacturing mechanical watch or timepiece components exist. Traditionally such components were manufactured using bulk removal processes such as cutting, drilling, milling and turning.

Another method that has more recently been used to produce timepiece components is the UV-LIGA technology, wherein "LIGA" is a German acronym for "Lithographie, Galvanoformung, Abformung" (English: lithography, electroplating, and moulding). LIGA is a fabrication technology that enables the production of components with high-aspect-ratio microstructures.

However, the LIGA process has several disadvantages. For example, LIGA typically uses photolithography for the fabrication of moulds, a technology that requires a highly controlled environment, in particular a clean room and special lighting conditions. Furthermore, the fabrication of a LIGA mould requires several process steps, namely spin coating of a resist layer, prebake, UV exposure, post-exposure bake and development of the resist layer. As a result LIGA manufacturing results in long processing times. While enabling the production of microstructures with very high precision and in plane complex shapes, LIGA's mould fabrication remains costly. Furthermore, multilevel structures made by LIGA are restricted to successive in-plan shapes and require the repetition of additional photolithographic process steps making the LIGA technology for complex 3D parts fairly expensive. In addition, LIGA does not enable the production of components with integrated decorated surfaces or the production of crowned surfaces or controlled chamfered edges, those limitations being a result of the directional character of the photolithographic process.

The replication of micro-scale (and/or nano-scale) features in polymers from a master is another known method for manufacturing components. For example, the documents CH601500, JP2007240416 and EP287746 discloses a method for producing a component with decorative surface structure, comprising the steps of forming a casting of the surface of a master model in a polymeric material, applying a thin conducting layer to the surface of the casting, and then electroforming the polymeric casting to produce a metallic replica of the desired surface. A hot embossing and electroforming method using a conductive substrate and giving similar results is disclosed in document JP2006082477.

In such known methods, the replication of the master into a polymer material is generally achieved by way of a compression moulding, hot embossing, injection moulding or casting step. With compression moulding and hot embossing, a solid substrate is placed in an open mould between two master mould halves. The substrate is heated to soften it, pressure is applied to replicate the mould surfaces and the substrate is then cooled. The polymers used in compression moulding and hot embossing typically have low fluidity and require high pressure and long process cycle times in order to flow. Although there is generally low moulded-in stress in the resulting polymer moulds due to the minimal material flow during this process, the thickness and aspect ratio of the final component are not well-controlled with compression moulding or hot embossing, and the resulting components also often have poorly defined edges.

In injection moulding, the polymer material is melted and then squeezed into the master mould having a cavity that is the inverse of the desired shape. The shape and thickness control is generally high with injection moulding, but high fluidity polymer grades are required in order to distribute the melted polymer throughout the master surface thus leading to eventual deformations of replicated patterns while releasing the moulded product from the master. On the other hand the flow of polymer material leads to inhomogeneous and high moulded-in stress and so the fidelity of surface reproduction is insufficient for many types of watch components. Furthermore, the master moulds used are generally complex and of higher cost.

In polymer replication via casting, a monomer or a polymer dissolved in a suitable solvent is placed against a master mould. The solution is polymerised, for example by heat or UV radiation, and the polymer replica of the mould is then removed. Further processing of the replica is then typically necessary, and the fidelity of surface reproduction may be insufficient with casting. Furthermore, the equipment required for casting is generally large and expensive, the tooling for a particular pattern is expensive, and the changeover between different patterns is lengthy and difficult.

It is an objective of the present invention to alleviate the above-mentioned disadvantages, and in particular to provide a method for manufacturing a timepiece component using a high-precision replicated polymer mould that is efficient and inexpensive, capable of producing multi-level components with free forms and edges as well as with surface textures and decorations on a small scale, while maintaining good fabrication tolerances similar to those achievable with the UV LIGA process.

In one aspect, the present invention provides a method for manufacturing a timepiece component comprising the steps of manufacturing a master for the timepiece component and then manufacturing a polymer mould based on the master piece. The mould is then filled with a metallic material (e.g., by electroforming or electroless plating) such as to build up the timepiece component with the material, and the component is subsequently separated from the mould. According to the invention, during the step of manufacturing the mould, a fluid resin is applied onto the master.The master is placed on a fixed support, and after the fluid resin has been applied on to the master, the resin is pressed onto the master by means of a press. Preferably, the step of filling the mould with the metallic material is preceded by a step of at least partly coating the mould with a conductive or catalytic coating. A step of polishing, grinding or lapping the timepiece component may occur after the step of filling the mould and before the step of separating the timepiece component from the mould.

The fixed support may be heated to a temperature between 100-350°C, preferably between 180-325°C while fluid resin is being applied onto the master. The support may also be heated while the press is applied. The press may be applied with a pressure of 1-15 MPa, preferably 2.5 - 12.5 MPa. After the press is applied, the support is preferably cooled until the resin solidifies.

The resin may comprise at least one of the following materials: polycarbonate, poly(methyl methacrylate), cyclic olefin polymer, cyclic olefin copolymer and/or polystyrene. Once cooled and solidified, the polymer material of the mould may have a bending modulus at ambient conditions that is between 1800 MPa and 3700 MPa, preferably between 2000 MPa and 3500 MPa, and more preferably between 2200 MPa and 3300 MPa.

The metallic material used to fill the moulds may be an alloy or a metal composite material containing nickel or gold.

In preferred embodiments, a plurality of essentially identical masters are used to manufacture a matrix of moulds in a single substrate in order to enable high volume replication of the timepiece component. In this case, at least one channel may be formed between cavities of two adjacent moulds such that every mould is linked to at least one other mould by means of at least one channel, a conductive layer being deposited at the bottom of the channels prior to the step of filling the moulds with the metallic material to build up the timepiece components.

Exemplary embodiments of the present invention are now described below with reference to the drawings, in which:
Figure 1 is a schematic diagram illustrating the steps in a method for manufacturing a timepiece component in accordance with an embodiment of the invention;
Figure 2 is a schematic diagram illustrating the step of applying the resin to the master piece of Figure 1 in more detail;
Figure 3 is a cross-section schematic view through a polymer substrate comprising two moulds in one embodiment;
Figure 4 is a top schematic view of a polymer substrate comprising two moulds in another embodiment;
Figure 5 is a cross-section schematic view through the line V-V in Figure 4;
Figure 6 is a cross-section schematic view through a polymer substrate comprising two moulds in a further embodiment; and
Figure 7 is a top schematic view of the polymer substrate mould of Figure 6.

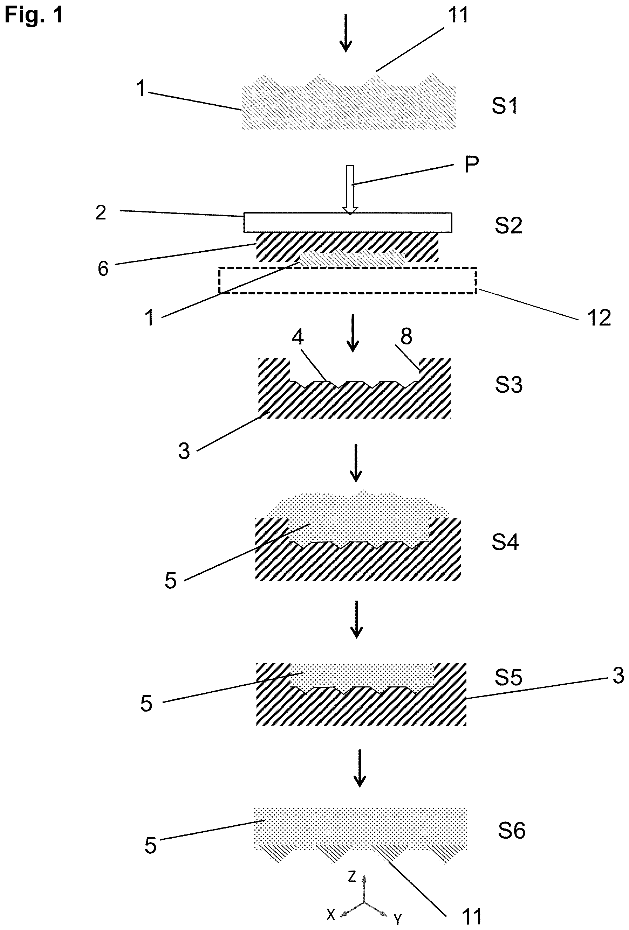

In accordance with an embodiment of the present invention, Figure 1 is schematic diagram illustrating a method for manufacturing a timepiece component 5 using a high precision polymer mould 3 obtained by polymer replication of a master piece 1. The component 5 forms part of a mechanical or electronic timepiece such as a gear, pinion, bridge, plate, dial, lever, pallet or pin.

During a first step S1, a master piece 1 of the final component is manufactured. The master may be fabricated by any known method such as by cutting, drilling, milling, electrical discharge machining (EDM), electroforming/electroplating, UV-LIGA or deep reactive-ion etching (DRIE) of a silicon or other wafer. Alternatively a master may be fabricated using the method of the present invention. It is also possible to use combined processes for manufacturing the master piece, for example a mechanical shaping of a metallic block and a subsequent processing by means of laser structuration technology or decorative finishing to provide a high degree of precision to the final master 1.

The timepiece component may, for example, have a height or thickness in the range of 100 µm - 3 mm. Advantageously, on at least one surface, the master 1 may comprise a surface topology or pattern 11 that may be functional, decorative or otherwise comprise markings on the nanometer and/or micrometer scale. The pattern 11 may notably comprise geometries with high aspect ratios, i.e., height vs. width (or height vs. diameter), and high dimensional precision that the method of the present invention can faithfully transcribe and replicate in the final timepiece components.

In accordance with the present invention, during a second step S2, the shape of the timepiece component master 1 is replicated in a polymer material using a melt transcription moulding (MTM) process. As will be appreciated, a plurality of essentially identical masters 1 may be used to form several polymer moulds 3 in a single process step to provide a matrix or series of moulds in a single polymer substrate thereby enabling mass replication and production of the desired timepiece component.

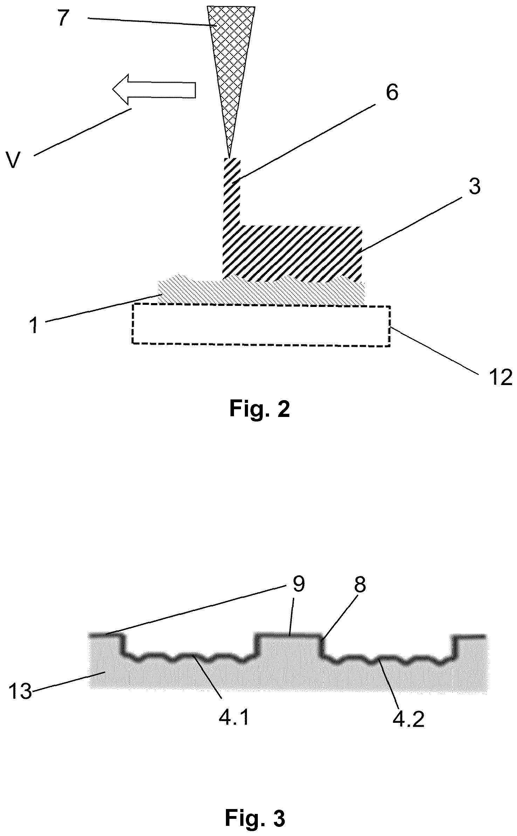

During step S2, which is illustrated in more detail in Figure 2, the master 1 is placed on a fixed support (or lower mould part) 12, and a melted or fluid polymer resin 6 is coated onto the master 1 through a die 7 of a resin applicator (not shown). The resin applicator, which may be a plasticizing and injection unit, receives thermoplastic resin pellets and heats them, for example to a temperature between 200-300°C, in order to feed the fluid resin to the die that is connected to the resin applicator. During the coating step the die, which may be a T-die, moves at a speed V over the surface of the master 1. In general, the width of the die, the speed of the die V and/or the volumetric flow rate from the resin applicator can be adjusted to provide a desired coating thickness of the fluid resin on the master 1.

In a preferred embodiment, the temperature of the support 12 and therefore also indirectly the temperature of the master 1 is controlled during the coating step. In particular, the fluid polymer resin that has been coated onto the master 1 is preferably kept at a temperature above the glass transition temperature of the polymer until the compression sequence is started. This maintains the fluidity and wetting properties (i.e., the ability to maintain contact with the surface of the master) of the melted polymer during that compression step. By way of example, the temperature of support 12 during the coating step may be between 100-350°C, and preferably it is between 180-325°C. In one particular example, the temperature of the support 12 is kept at about 200°C during the coating process.

The fluidity of the polymer resin used in step S2 will vary according to the type of polymer used, and in general various types of polymeric materials can be used in the method of the present invention. In general, once the resin has cooled and solidified, the resulting polymer material of the mould may have a bending modulus at ambient conditions that is between 1800 MPa and 3700 MPa, preferably between 2000 MPa and 3500 MPa, and more preferably between 2200 MPa and 3300 MPa. In one preferred embodiment, the resin is a low-fluidity resin with a high molecular weight. By way of example, the resin may comprise at least one of the following polymer materials polycarbonate, poly(methyl methacrylate), cyclic olefin polymer, cyclic olefin copolymer and/or polystyrene. In one preferred embodiment, polycarbonate is used due its high strength (once solidified), comparably low bending modulus, resistance to oxidation, thermal stability, chemical resistance and the fact that it is comparably easy to handle.

Once the coating is complete, a movable press (or upper mould part) 2 presses the fluid resin 6 onto the master 1 with a pressure that may vary in a carefully controlled manner but in general it is much lower than the pressures used in a compression moulding or hot embossing process. For example, the applied pressure of press 2 may be in the range of 1-15 MPa, and more preferably it is between 2.5 - 12.5 MPa. In one embodiment, the atmospheric conditions during this press step are controlled such that it takes place in a vacuum or in a low atmospheric pressure chamber.

Due to its fluidity, wetting properties and low elasticity, the fluid polymer resin advantageously fills all the voids and cavities in the micro-nano surface pattern 11 on the master during the moulding process during the press moulding step. In addition, the cycle times for the compression step are relatively low compared to conventional polymer mould replication processes.

The fluidity of the polymer resin need not be very high as is necessary for injection moulding because the resin does not need to flow into the mould during the coating step. It is therefore possible to use resins with relatively low fluidity and high molecular weight which helps to keep the moulded-in stress of the solidified polymer moulds 3 low. In this way, the risk of damaging the moulded product while releasing it from the master is drastically reduced as well since it is possible to significantly reduce the strain on the moulded product and achieve a homogenous and uniform replication of the master. Moreover, if the fluidity is not too high, the melted resin does not flow over most of the master during the coating and pressing processes, and this serves to enable precise coating of the melted resin to the desired width, length, and thickness of the final timepiece component.

After the press 2 has been applied in the compression step, the support 12 is cooled so that both the polymer resin and the master are cooled down in order to solidify the resin 6. The press may be released once the master 1 and the polymer have reached a temperature lower than the solidification temperature of the polymer, for example a temperature in the range of 20 to 60°C. The cooling may occur according to a desired temperature sequence to influence the cooling down and the hardening of the resin, in particular such that viscosity of the resin during the pressing phase and the hardening process during the releasing phase are optimized. However, it is not absolutely necessary to control the temperature of the master during the final stages of the process, and in some embodiments, cooling may simply involve cessation of the heating during previous steps.

After it has sufficiently cooled, the replicated polymer mould 3 is released or separated from the master 1. Once solidified, the polymer or resin can for example be amorphous, semicrystalline or crystalline. As indicated above, the resulting polymer moulds 3 advantageously have low residual or moulded-in stress and high material strength, and therefore deformations of the polymer mould are greatly minimised during their release. The retraction or shrinkage in the polymer moulds is also very low, for example less than 1% and in some cases even lower than 0.1%. In this way, the pattern 11 of the master 1 can be faithfully replicated without burrs, collapse, elongation, or breakage in the polymer mould 3.

The polymer moulds 3 are then filled with a metallic material in order to produce the timepiece component. This could be a metal alloy comprising nickel or gold or a metal composite material, for example. Building up the timepiece component by a metal deposition step is advantageous because metal deposition allows obtaining a high quality timepiece component with high precision and in a controlled manner.

In one preferred embodiment, a galvanic electroforming process is used to fill the mould 3. In this case, the base structure surface of the mould (or a selected part thereof), must first be made conductive to enable the subsequent metallic growth in the mould 3 by galvanic means. As shown in step S3 in Figure 1, a conductive layer 4 is therefore formed on the base or bottom surface of the mould 3. Layer 4 may for example comprise Cu or Ag, but other metals such as Au, Ir, Pt, Rh can also be used. Physical vapour deposition techniques, such as sputtering or e-beam evaporation, or Jet Vapor Deposition (JVD) may for instance be used to coat the mould surface with a thin metallic seed layer 4. As discussed in more detail below in connection with Figures 3, 4 and 5, it is also generally necessary to form some type of conductive connection or channel to the conductive layer 4 at the base of a mould 3 .

In another embodiment, an electroless auto-catalytic chemical plating process is used to build up the metal timepiece component inside the polymer mould 3. Unlike electroforming, it is not necessary to pass an electric current through the solution to form the metal deposit. In addition, with a suitable pre-plate catalyst layer, the electroless process can enable metallic growth even on non-conductive surfaces. For instance, the surface activation to catalyse the chemical reaction for electroless plating may comprise the formation of an initial catalyst layer 4 in step S3 that may be created by salt chemistry, in particular by using silver-based salts. The deposition of the salt layer may occur on all or part of the surface to render it conductive and/or catalytic for electroless metal growth. The deposition may be carried out by immersion of the mould 3 in a bath containing a salt solution, for instance a solution containing a silver nitrate, silver acetate, silver oxalate, silver halide or silver perchlorate. Similar to the techniques used in analogue photography, the salt layer is dried and then fully or partially exposed to light so as to selectively form the catalyst layer 4. This exposure gives rise to a silver metallic layer to render the surface catalytic.

It is in principle also possible to use other techniques for creating a primer coating to prepare the surface of the mould to start a galvanic or an electroless process for producing the final components, for example, micro or nanodispensing or ink jet printing, metallization by spraying, immersion or a combination of these. In general, the metal coating can be created by means of a selective application and/or by means of a metallization using a mask.

Where applicable, particular care must be taken in forming the conductive and/or catalytic layer 4 on top of the pattern 11 formed at the bottom of the polymer mould surface in order not to affect or alter the precise geometry of that surface pattern.

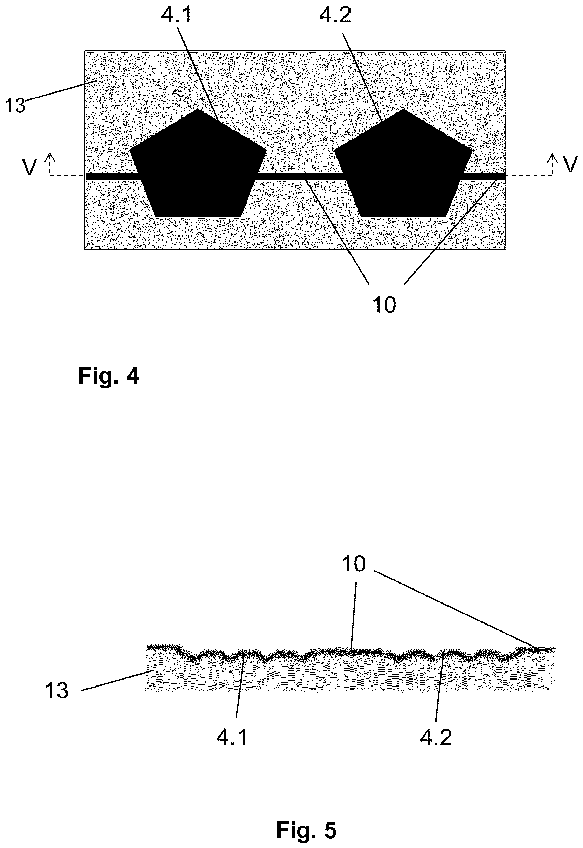

As indicated above, several polymer moulds can be formed in a single process step to provide a substrate comprising a matrix or series of moulds enabling high volume replication and production of the desired timepiece component. Such a polymer substrate 13 is shown in Figures 4-8 which illustrate different embodiments for forming the conductive and/or catalytic layers 4 in the moulds 3 in manner which also permits the building up of a plurality of timepiece components in a single process step.

In particular where an electroforming process is used to fill several moulds 3 formed in the polymer substrate 13, the conductive layers 4 in each mould are preferably electrically connected to one another to facilitate their function as conductive mandrels. In a first variant shown in the cross-section schematic view of Figure 3, a conductive layer is formed non-selectively over the entire surface of the polymer substrate 13. This includes the bottom surfaces of the different moulds (layers 4.1 and 4.2 in Figure 3) as well as the side walls 8 of the moulds and the top surface 9 of the substrate 13. In this way, the layers 4.1 and 4.2 inside the cavities of the moulds 3 are electrically connected, thus making it possible to build up the timepiece components 5 simultaneously by means of a single electroforming step. However, the fact that the side wall surfaces 8 of the moulds are also coated may not be preferred since, depending on the coating process used, it may be difficult to coat of the side walls 8 evenly which may lead to the formation of clusters on these surfaces and affect the faithful replication of the components.

Figures 4 and 5 therefore show a second variant for connecting conductive layers 4 in each mould electroforming process. Figure 4 is a top schematic view of the polymer substrate 13 and Figure 5 is a cross-section schematic view through the line V-V in Figure 4. In this case, channels 10 between adjacent moulds 3 are formed in the polymer substrate 13 during the moulding step S2, such that every individual mould is linked to at least one other mould by means of at least one channel. The conductive material is then selectively deposited at the base of moulds 3 to form layers 4.1, 4.2 and also at the base of the channels 10 to electrically connect the layers 4.1, 4.2 in adjacent moulds and thereby enable simultaneous electroforming. Advantageously, in this variant, there is no need to deposit the conductive material on the side walls 8 of the moulds 3.

In another variant (not shown), conductive pins may be inserted into the polymer substrate 13 from the rear surface of the substrate to the bottom of each mould 3, the pins being electrically connected to the base conductive layer 4 after the latter is formed. The pins may be inserted either during or subsequent to moulding step S2, and if necessary channels for the pins may be pre-formed in the substrate during that step. The pins may for example be made of stainless steel which, when the final timepiece component 5 comprises nickel, enables a quick and easy separation when the component is finally separated from the mould 3. This is due to the poor adhesion between nickel and the chrome in the stainless steel. Again, in this variant, there is no need to deposit the conductive material on the side walls 8 of the moulds 3 when forming base conductive layers 4.

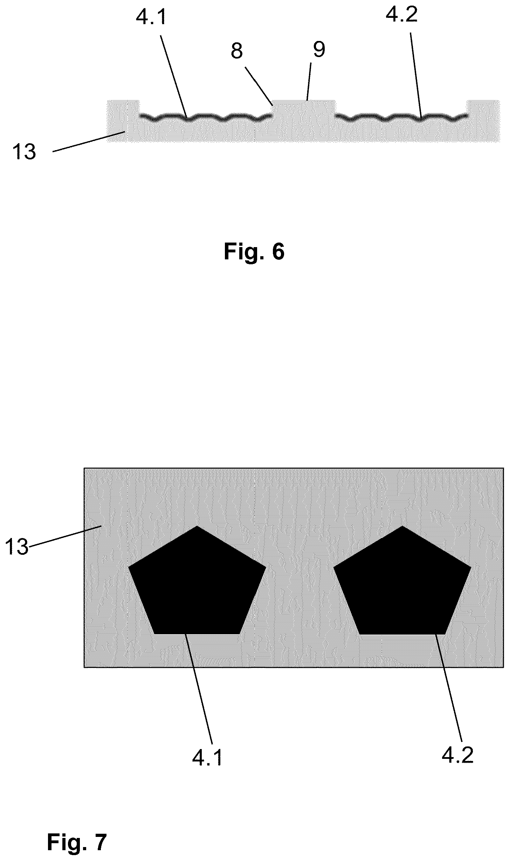

On the other hand, where an electroless process is used to fill several moulds 3 formed in the polymer substrate 13, there is no longer a need to for the catalytic layers 4 in each mould to be electrically connected to one another. Thus, as shown in the cross-section schematic view of Figure 6 and the top schematic view of Figure 7, the layers 4.1, 4.2 in adjacent or different moulds can be formed only on the bottom surfaces of the moulds

Referring again to Figure 1, at step S5, once the building up metallization step is complete, a step of polishing the top surface of the timepiece component 5 is carried out in order to obtain a precise thickness of the produced component. Polishing the timepiece component 5 before removing it from the mould 3 has the advantage that the timepiece component can easily be held in place without having to handle the component itself. Instead, the mould 3 can be handled as an intermediary fixture piece and the surface of timepiece component remains protected and thus does not risk being damaged, scratched or the like.

At step S6, the timepiece component 5 is separated from the mould 3. The step of separating the timepiece component may comprise a mechanical separation or a chemical separation. A mechanical separation is preferable to a chemical separation through dissolving the mould, because it is less aggressive, easier to handle and quicker. In addition, the step of coating the mould before the plating step can also be used to enable the adhesion between the mould and the final component 5 to be lessened for this release or separation step.

The resulting timepiece component (or components) 5 thus has the same shape, form and dimensions as the master piece 1 to within extremely small tolerances, in particular due to the use of the MTM moulding process in step 2 which provides very high replication capabilities in the lateral dimensions of the component (i.e., the X-Y plane as shown in Figure 1) in and especially in the vertical or height dimension (i.e., the Z direction as shown in Figure 1). The MTM process also results in very low and homogenous shrinkage (or retraction) of the moulds, and therefore the residual stress on the mould is minimized. Furthermore, the MTM process enables the replication of components with large height-to-width aspect ratios (e.g., up to 20:1) and very high verticality of side surfaces. As a result, the pattern 11 on the surface of the master is also precisely and accurately transcribed and replicated in the final timepiece components 5, even though the pattern is on the nanometer and/or micrometer scale.

## Claims

1. A method for manufacturing a timepiece component (5), the method comprising the steps of:
- manufacturing (S1) of a master (1) for the timepiece component;
- manufacturing (S2) of a polymer mould (3) based on the master piece (1);
- filling (S4) the mould with a metallic material such as to build up the timepiece component (5) with the material; and
- separating (S6) the timepiece component (5) from the mould (3);
wherein, during the step of manufacturing (S2) the mould (3), a fluid resin (6) is applied onto the master (1), and
**characterised in that** during the step of manufacturing (S2) the mould (3), the master (1) is placed on a fixed support (12), and after the fluid resin (6) has been applied on to the master (1), the resin (6) is pressed onto the master by means of a press (2).

2. The method according to claim 1, **characterised in that** while fluid resin (6) is being applied onto the master (1), the fixed support (12) is heated to a temperature between 100-350°C, preferably between 180-325°C.

3. The method according to claim 1 or 2, **characterised in that** press (2) is applied with a pressure of 1-15 MPa, preferably 2.5 - 12.5 MPa.

4. The method according to claim 2 or 3, **characterised in that** the support (12) is heated while the press (2) is applied.

5. The method according to any one of claims 1 - 4, **characterised in that** after the press (2) is applied, the support (12) is cooled until the resin (6) solidifies.

6. The method according to any one of the previous claims, **characterised in that** the resin (6) comprises at least one of the following materials: polycarbonate, poly(methyl methacrylate), cyclic olefin polymer, cyclic olefin copolymer and/or polystyrene.

7. The method according to any one of the previous claims, **characterised in that** once cooled and solidified, the polymer material of the mould (3) has a bending modulus at ambient conditions that is between 1800 MPa and 3700 MPa, preferably between 2000 MPa and 3500 MPa, and more preferably between 2200 MPa and 3300 MPa.

8. The method according to any one of the previous claims, **characterised in that** the step (S4) of filling the mould (3) with the metallic material comprises electroforming or electroless plating.

9. The method according to any one of the previous claims, **characterised in that** the metallic material is an alloy or a metal composite material containing nickel or gold.

10. The method according to claim 8 or 9, **characterised in that** the step (S4) of filling the mould (3) with the metallic material is preceded by a step of at least partly coating (S3) the mould (3) with a conductive or catalytic coating (4).

11. The method according to any one of the previous claims, further comprising a step (S5) of polishing, grinding or lapping the timepiece component (5), after the step (S4) of filling the mould (3) with the material and before the step (S6) of separating the timepiece component (5) from the mould (3).

12. The method according to any one of the previous claims, **characterised in that** the step (S6) of separating the timepiece component (5) from the mould (3) comprises a mechanical separation.

13. The method according to any one of the previous claims, **characterised in that** a plurality of essentially identical masters (1) are used to manufacture a matrix of moulds (3) in a single substrate, to enable high volume replication of the timepiece component (1).

14. The method according to claim 13, **characterised in that** at least one channel (10) is formed between cavities of two adjacent moulds (3) such that every mould is linked to at least one other mould by means of at least one channel (10).

15. The method according to claim 14, **characterised in that** a conductive layer is deposited at the bottom of the channels (10) prior to the step of filling (S4) the moulds (3) with the metallic material to build up the timepiece components (5).

## Patentansprüche

1. Verfahren zur Herstellung einer Uhrenkomponente (5), das Verfahren umfassend die Schritte:
- Herstellen (S1) eines Bezugsformstücks (1) für die Uhrenkomponente;
- Herstellen (S2) einer Polymerform (3), die auf dem Bezugsformstück (1) basiert ist;
- Füllen (S4) der Form mit einem metallischen Material, um die Uhrenkomponente (5) mit dem Material auszubilden; und
- Trennen (S6) der Uhrenkomponente (5) von der Form (3) ;
wobei während des Schrittes des Herstellens (S2) der Form (3) ein flüssiges Harz (6) auf das Bezugsformstück (1) aufgebracht wird, und
**dadurch gekennzeichnet, dass** während des Schrittes des Herstellens (S2) der Form (3), das Bezugsformstück (1) auf ein festes Auflager (12) platziert wird, und nachdem das flüssige Harz (6) auf das Bezugsformstück (1) aufgebracht worden ist, das Harz (6) mittels einer Presse (2) auf das Bezugsformstück gepresst wird.

2. Verfahren nach Anspruch 1, **dadurch gekennzeichnet, dass**, während flüssiges Harz (6) auf das Bezugsformstück (1) aufgebracht wird, das feste Auflager (12) auf eine Temperatur zwischen 100 und 350 °C, vorzugsweise zwischen 180 und 325 °C erwärmt wird.

3. Verfahren nach Anspruch 1 oder 2, **dadurch gekennzeichnet, dass** die Presse (2) mit einem Druck von 1-15 MPa, vorzugsweise 2,5-12,5 MPa angewendet wird.

4. Verfahren nach Anspruch 2 oder 3, **dadurch gekennzeichnet, dass** das Auflager (12) erwärmt wird, während die Presse (2) angewendet wird.

5. Verfahren nach einem der Ansprüche 1-4, **dadurch gekennzeichnet, dass**, nachdem die Presse (2) angewendet worden ist, das Auflager (12) gekühlt wird, bis das Harz (6) erstarrt.

6. Verfahren nach einem der vorhergehenden Ansprüche, **dadurch gekennzeichnet, dass** das Harz (6) wenigstens eines der folgenden Materialien umfasst: Polycarbonat, Polymethylmethacrylat, Cycloolefinpolymer, Cycloolefin-Copolymer und/oder Polystyrol.

7. Verfahren nach einem der vorhergehenden Ansprüche, **dadurch gekennzeichnet, dass**, nachdem es abgekühlt und erstarrt ist, das Polymermaterial der Form (3) einen Biegemodul bei Umgebungsbedingungen aufweist, welcher zwischen 1800 MPa und 3700 MPa, vorzugsweise zwischen 2000 MPa und 3500 MPa und stärker bevorzugt zwischen 2200 MPa und 3300 MPa beträgt.

8. Verfahren nach einem der vorhergehenden Ansprüche, **dadurch gekennzeichnet, dass** der Schritt (S4) des Füllens der Form (3) mit dem metallischen Material Elektroformen oder außenstromloser Abscheidung umfasst.

9. Verfahren nach einem der vorhergehenden Ansprüche, **dadurch gekennzeichnet, dass** das metallische Material eine Legierung oder ein Metallverbundmaterial ist, die Nickel oder Gold enthält.

10. Verfahren nach Anspruch 8 oder 9, **dadurch gekennzeichnet, dass** dem Schritt (S4) des Füllens der Form (3) mit dem metallischen Material ein Schritt des wenigstens teilweisen Beschichtens (S3) der Form (3) mit einer leitfähigen oder katalytischen Beschichtung (4) vorausgegangen ist.

11. Verfahren nach einem der vorhergehenden Ansprüche, welches ferner einen Schritt (S5) des Polierens, Schleifens oder Läppens der Uhrenkomponente (5) nach dem Schritt (S4) des Füllens der Form (3) mit dem Material und vor dem Schritt (S6) des Trennens der Uhrenkomponente (5) von der Form (3) umfasst.

12. Verfahren nach einem der vorhergehenden Ansprüche, **dadurch gekennzeichnet, dass** der Schritt (S6) des Trennens der Uhrenkomponente (5) von der Form (3) eine mechanische Trennung umfasst.

13. Verfahren nach einem der vorhergehenden Ansprüche, **dadurch gekennzeichnet, dass** mehrere im Wesentlichen identische Bezugsformstücke (1) verwendet werden, um eine Matrix von Formen (3) in einem einzigen Substrat herzustellen, um eine Fertigung der Uhrenkomponente (1) in großer Stückzahl zu ermöglichen.

14. Verfahren nach Anspruch 13, **dadurch gekennzeichnet, dass** wenigstens ein Kanal (10) zwischen Hohlräumen von zwei benachbarten Formen (3) ausgebildet wird, so dass jede Form mit wenigstens einer anderen Form mittels wenigstens eines Kanals (10) verbunden ist.

15. Verfahren nach Anspruch 14, **dadurch gekennzeichnet, dass** vor dem Schritt des Füllens (S4) der Formen (3) mit dem metallischen Material, um die Uhrenkomponenten (5) auszubilden, eine leitfähige Schicht am Boden der Kanäle (10) aufgebracht wird.

## Revendications

1. Procédé de fabrication d'un composant horloger (5), le procédé comprenant les étapes de :
- fabrication (S1) d'un gabarit (1) pour le composant horloger ;
- fabrication (S2) d'un moule polymère (3) basé sur la pièce gabarit (1) ;
- remplissage (S4) du moule avec un matériau métallique de manière à constituer le composant horloger (5) par le matériau ; et
- séparation (S6) du composant horloger (5) du moule (3) ;
dans lequel, pendant l'étape de fabrication (S2) du moule (3), une résine fluide (6) est appliquée sur le gabarit (1), et
**caractérisé en ce que**, pendant l'étape de fabrication (S2) du moule (3), le gabarit (1) est placé sur un support fixe (12), et après que la résine fluide (6) a été appliquée sur le gabarit (1), la résine (6) est comprimée sur le gabarit au moyen d'une presse (2).

2. Procédé selon la revendication 1, **caractérisé en ce que**, pendant que la résine fluide (6) est appliquée sur le gabarit (1), le support fixe (12) est chauffé jusqu'à une température comprise entre 100 et 350 °C, de préférence entre 180 et 325 °C.

3. Procédé selon la revendication 1 ou 2, **caractérisé en ce que** la presse (2) est appliquée avec une pression de 1-15 MPa, de préférence 2,5-12,5 MPa.

4. Procédé selon la revendication 2 ou 3, **caractérisé en ce que** le support (12) est chauffé pendant que la presse (2) est appliquée.

5. Procédé selon l'une quelconque des revendications 1 à 4, **caractérisé en ce que**, après que la presse (2) a été appliquée, le support (12) est refroidi jusqu'à ce que la résine (6) se solidifie.

6. Procédé selon l'une quelconque des revendications précédentes, **caractérisé en ce que** la résine (6) comprend au moins l'un des matériaux suivants : polycarbonate, poly(méthacrylate de méthyle), polymère oléfinique cyclique, copolymère oléfinique cyclique et/ou polystyrène.

7. Procédé selon l'une quelconque des revendications précédentes, **caractérisé en ce que**, une fois refroidi et solidifié, le matériau polymère du moule (3) a un module de flexion sous des conditions ambiantes qui se situe entre 1800 MPa et 3700 MPa, de préférence entre 2000 MPa et 3500 MPa, et encore de préférence entre 2200 MPa et 3300 MPa.

8. Procédé selon l'une quelconque des revendications précédentes, **caractérisé en ce que** l'étape (S4) de remplissage du moule (3) avec le matériau métallique comprend un électroformage ou une déposition autocatalytique.

9. Procédé selon l'une quelconque des revendications précédentes, **caractérisé en ce que** le matériau métallique est un alliage ou un matériau composite métallique contenant du nickel ou de l'or.

10. Procédé selon la revendication 8 ou 9, **caractérisé en ce que** l'étape (S4) de remplissage du moule (3) avec le matériau métallique est précédée d'une étape de revêtement au moins partiel (S3) du moule (3) avec un revêtement conducteur ou catalytique (4).

11. Procédé selon l'une quelconque des revendications précédentes, comprenant en outre une étape (S5) de polissage, meulage ou rodage du composant horloger (5), après l'étape (S4) de remplissage du moule (3) avec le matériau et avant l'étape (S6) de séparation du composant horloger (5) du moule (3).

12. Procédé selon l'une quelconque des revendications précédentes, **caractérisé en ce que** l'étape (S6) de séparation du composant horloger (5) du moule (3) comprend une séparation mécanique.

13. Procédé selon l'une quelconque des revendications précédentes, **caractérisé en ce qu'**une pluralité de gabarits substantiellement identiques (1) sont utilisés pour fabriquer une matrice de moules (3) dans un seul substrat, pour permettre une reproduction en grandes quantités du composant horloger (1).

14. Procédé selon la revendication 13, **caractérisé en ce qu'**au moins un canal (10) est formé entre des cavités de deux moules adjacents (3) de telle sorte que chaque moule est relié à au moins un autre moule par l'intermédiaire d'au moins un canal (10).

15. Procédé selon la revendication 14, **caractérisé en ce qu'**une couche conductrice est déposée au fond des canaux (10) avant l'étape de remplissage (S4) des moules (3) avec le matériau métallique pour constituer les composants horlogers (5).
